# FASCICULE DE BREVET EUROPEEN

(11) **EP 1 170 200 B1**
(45) Date de publication et mention de la délivrance du brevet: **17.12.2003**
(21) Numéro de dépôt: 01401735.4
(22) Date de dépôt: 29.06.2001
(51) Int. Cl.: B62D 55/32, B25B 27/22

(54) **Dispositif d'aide au chenillage**
Montierhilfe für Raupenkette
Chain mounting tool

(30) Priorité: 07.07.2000 FR 0008871
(43) Date de publication de la demande: 09.01.2002
(73) Titulaire: GIAT INDUSTRIES, 78000 Versailles (FR)
(72) Inventeur: Timmer, Bernard, 78700 Conflans Saint Honorine (FR); Thuillier, Eric, 78280 Guyancourt (FR)
(74) Mandataire: Célanie, Christian

(56) Documents cités:
- US-A- 1 814 892

## Description

Le secteur technique de la présente invention est celui des outils à main pour le montage de chenilles à connecteurs préangulés sur les véhicules du type chars ou engins chenillés. Un dispositif selon le préambule de la revendication 1 est connu.

L'installation d'une chenille sur un véhicule, appelé chenillage, est souvent une opération difficile et hasardeuse. En effet, une chenille à connecteurs préangulés utilisée en particulier sur les engins blindés posent un réel problème de mise en place. Cette dernière, lorsqu'elle est ouverte et étendue sur le sol, voit ses extrémités se relever à une hauteur du sol gênante à l'opération de chenillage. En effet, les connecteurs préangulés des extrémités de la chenille exercent un couple de préangulation qui tend à relever ces extrémités. Dans cette configuration et sans une intervention humaine pour les affaisser, l'engin ne peut s'engager sans dommage pour la chenille. De plus, la proximité immédiate d'un opérateur lors d'un chenillage représente un danger non négligeable, en effet la casse d'une chenille peut entraîner des projections d'éléments. Il apparait alors nécessaire de disposer d'un système excluant toute intervention humaine.

Le but de la présente invention est donc de fournir un dispositif pour réaliser l'opération de chenillage, sans intervention humaine, en plaquant au sol les extrémités des chenilles et ainsi autoriser l'engagement du véhicule.

L'invention a donc pour objet un dispositif d'aide au chenillage d'un véhicule pour appliquer sur le sol une extrémité relevée d'une chenille ouverte, à connecteurs préangulés, caractérisé en ce qu'il comprend un premier élément fixé à la partie de chenille plaquée au sol et un second élément mobile et démontable par rapport audit premier élément apte à rabattre vers le sol l'extrémité relevée de la chenille pour permettre l'engagement du véhicule.

Selon une autre caractéristique de l'invention, le premier élément comprend un levier pivotant par rapport au premier élément et un moyen pour rabattre la chenille.

Selon encore une autre caractéristique de l'invention, le levier est en appui sur l'extrémité de la chenille et sur un axe solidaire du second élément.

Selon encore une autre caractéristique de l'invention, le moyen pour rabattre la chenille est du type mécanique, hydraulique ou pneumatique reliant le levier au second élément.

Selon encore une autre caractéristique de l'invention, le moyen mécanique pour rabattre la chenille est constitué d'une vis, d'une noix pivotante et d'un écrou de serrage.

Selon encore une autre caractéristique de l'invention, le second élément comprend deux brides, l'une supérieure, l'autre inférieure, reliées entre elles par deux boulons pour réaliser le blocage du premier élément par rapport à la chenille.

Selon encore une autre caractéristique de l'invention, la bride inférieure comporte des logements dans lesquels s'encastrent les connecteurs préangulés de la chenille pour immobiliser ces derniers par rapport aux brides.

La bride supérieure est conformée pour recevoir d'une part l'axe autour duquel pivote le levier et d'autre part le moyen pour rabattre la chenille.

Selon un autre caractéristique de l'invention, l'ensemble formé par :
- la partie de chenille plaquée au sol,
- l'extrémité relevée de la chenille, et
- le dispositif d'aide au chenillage,
exerce un couple supérieur à celui du dernier connecteur préangulé immobilisé par rapport aux brides.

Un tout premier avantage du dispositif selon l'invention réside dans la facilité qu'il offre pour exécuter un chenillage tout en écartant un éventuel danger.

Un autre avantage réside dans l'abaissement significatif du coût et du temps nécessaire à un chenillage.

Un autre avantage réside dans le fait que ce dispositif, léger et d'un encombrement réduit, peut être stocké dans un char de dépannage ou dans le véhicule lui-même.

Un autre avantage réside dans le fait que ce dispositif est adaptable sur divers types de chenilles.

D'autres caractéristiques, détails et avantages de l'invention ressortiront plus clairement à la lecture de la description donnée ci-après à titre indicatif en relation avec des dessins dans lesquels :
- la figure 1 est une vue éclatée du dispositif selon l'invention,
- la figure 2 est une vue du dispositif assemblé selon l'invention,
- la figure 3 est une vue en perspective du dispositif selon l'invention pré-positionné sur une chenille,
- la figure 4 est une vue en perspective du dispositif selon l'invention après bridage,
- la figure 5 est une vue en perspective du dispositif selon l'invention après plaquage de l'extrémité de la chenille sur le sol.

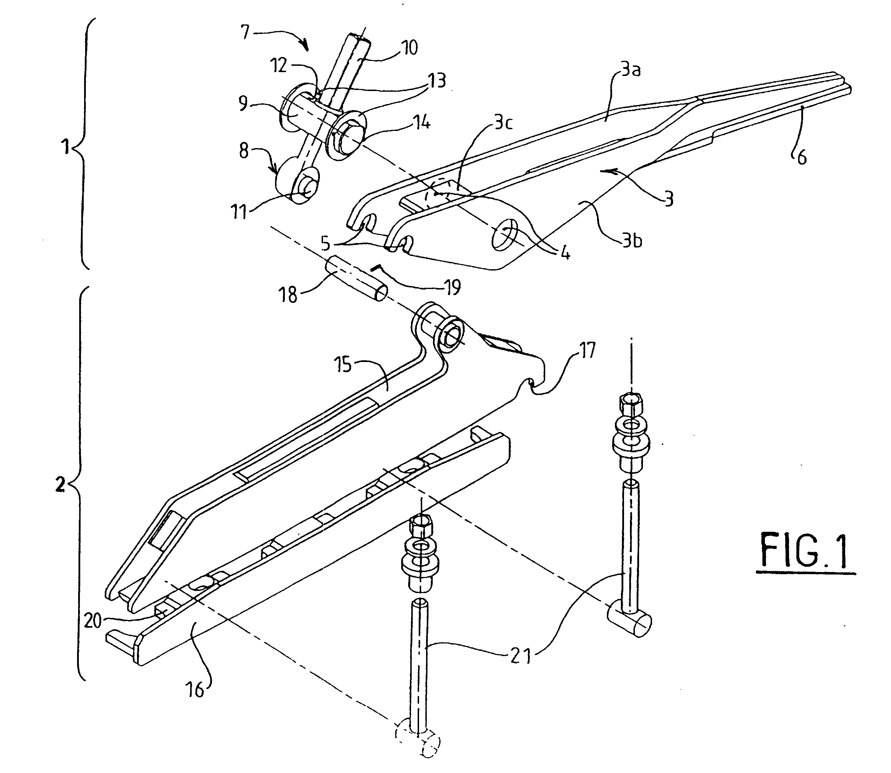

On a représenté à la figure 1 une vue éclatée du dispositif, sur laquelle on peut distinguer un premier élément 1 mobile par rapport à un second élément 2. Le premier élément 1 est constitué d'un levier 3 et d'un moyen 7 pour rabattre la chenille. Le levier 3 se présente sous la forme générale de deux joues effilées 3a et 3b sensiblement parallèles. Ces deux joues sont espacées à une extrémité par une entretoise 3c et jointes à l'autre extrémité. Cet ensemble 3a, 3b, 3c constitue le levier 3 et comporte dans sa partie la plus large deux trous 4, à une extrémité deux encoches 5 et à l'extrémité opposée un plat 6. Ce plat 6 est destiné à coopérer avec la chenille, il est d'une longueur suffisante pour maintenir en appui le levier 3 sur l'extrémité de la chenille tout au long de l'affaissement de celle-ci.

Le moyen 7 pour rabattre la chenille est constitué d'une vis 8, d'une noix pivotante 9 et d'un écrou de serrage 10. La vis 8 est filetée à une extrémité pour recevoir l'écrou de serrage 10, elle est usinée à l'autre extrémité pour délimiter deux ergots cylindriques 11. La noix pivotante 9 se présente sous la forme générale d'un axe dans lequel est pratiqué un trou perpendiculaire à son axe de rotation pour permettre le passage de la vis 8. De plus, un méplat 12 est usiné pour répartir les efforts de l'écrou 10. Le moyen 7 pour rabattre la chenille est positionné entre les joues 3a et 3b du levier 3, la noix pivotante 9 venant se positionner dans les trous 4. Le moyen 7 pour rabattre la chenille est maintenu en place par deux rondelles 13 et deux goupilles 14 de types connus.

Le second élément 2 comporte deux brides 15 et 16, l'une supérieure positionnée au-dessus de la chenille et l'autre inférieure positionnée en dessous de la chenille. La bride supérieure 15 comporte à une extrémité deux encoches 17 conformées pour recevoir les ergots cylindriques 11 de la vis 8. Cette bride 15 est usinée dans sa partie la plus large de manière à recevoir un axe 18. Ce dernier, débordant de part et d'autre de la bride supérieure 15 et maintenu en place par une goupille 19, reçoit le levier 3 en appui sur ses encoches 5. La bride 16 se présente sous une forme générale en «L». Les deux brides 15 et 16 sont d'une longueur sensiblement identique, la bride inférieure 16 comprend des logements 20 aptes à pincer les connecteurs préangulés de la chenille. De plus, les deux brides 15 et 16 sont percées entre les logements 20 pour permettre l'engagement des deux boulons 21. Ces derniers traversent les deux brides 15 et 16 et leurs serrages provoquent la prise en sandwich de la chenille.

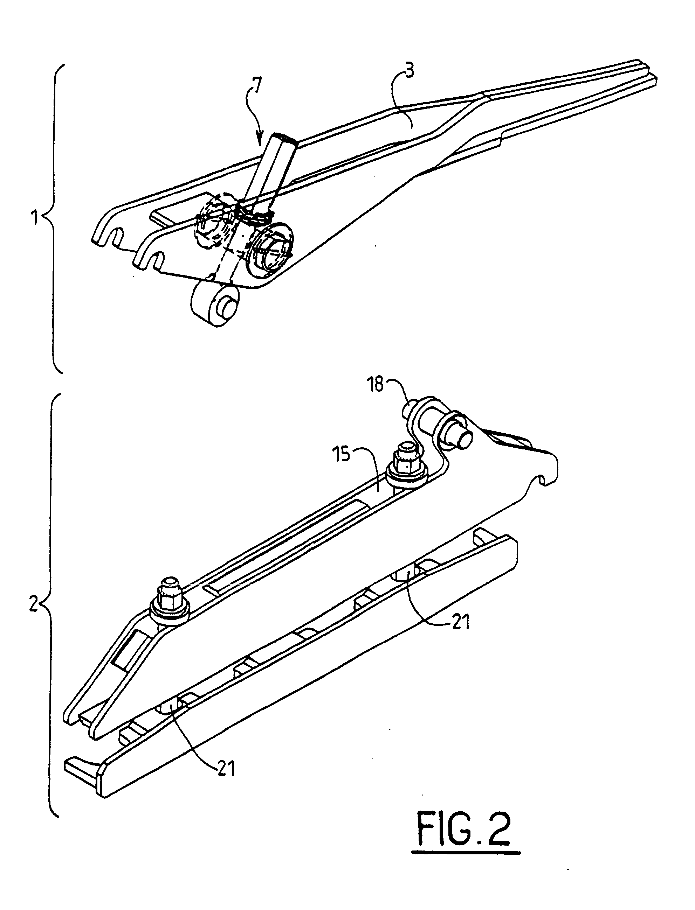

La figure 2 illustre le dispositif assemblé. En effet dans le premier élément 1 on distingue que le moyen 7 pour rabattre la chenille est positionné dans le levier 3 alors que dans le second élément 2 on remarque l'assemblage de l'axe 18 dans la bride supérieure 15, cette dernière étant relié à la bride inférieure 16 par les boulons 21.

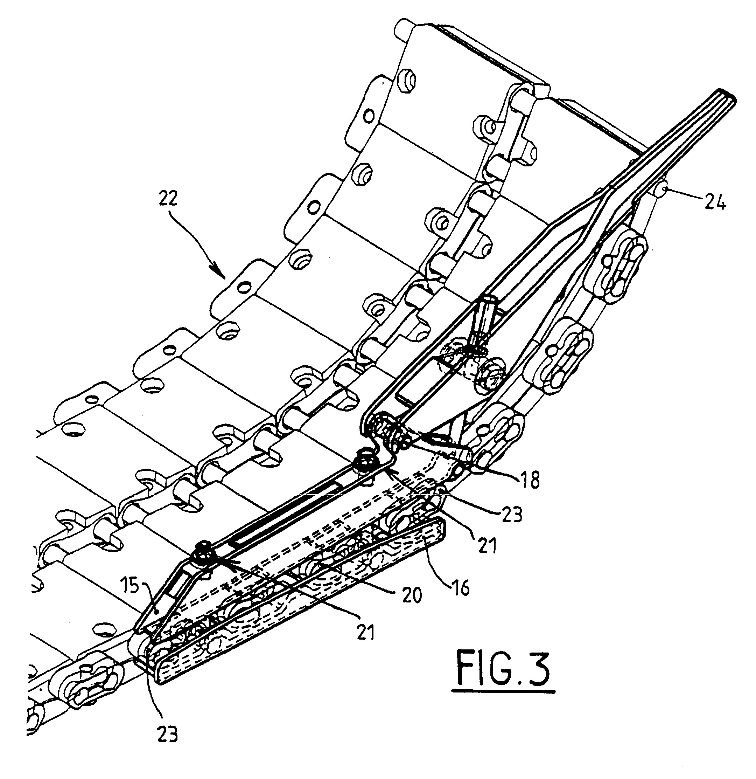

La figure 3 montre d'une part la mise en place du dispositif selon l'invention et d'autre part l'extrémité relevée 24 d'une chenille ouverte 22. La bride supérieure 15 est positionnée sur un coté de la chenille 22, la bride inférieure 16 étant disposée en vis à vis. Bien entendu, les connecteurs préangulés 23 sont encastrés dans les logements 20 pratiqués dans la bride inférieure 16. A ce stade du montage, ces dernières sont maintenues provisoirement par les boulons 21. Le premier élément 1 est en appui d'un côté sur l'axe 18 par coopération avec les encoches 5 et de l'autre sur l'extrémité libre 24 de la chenille ouverte 22.

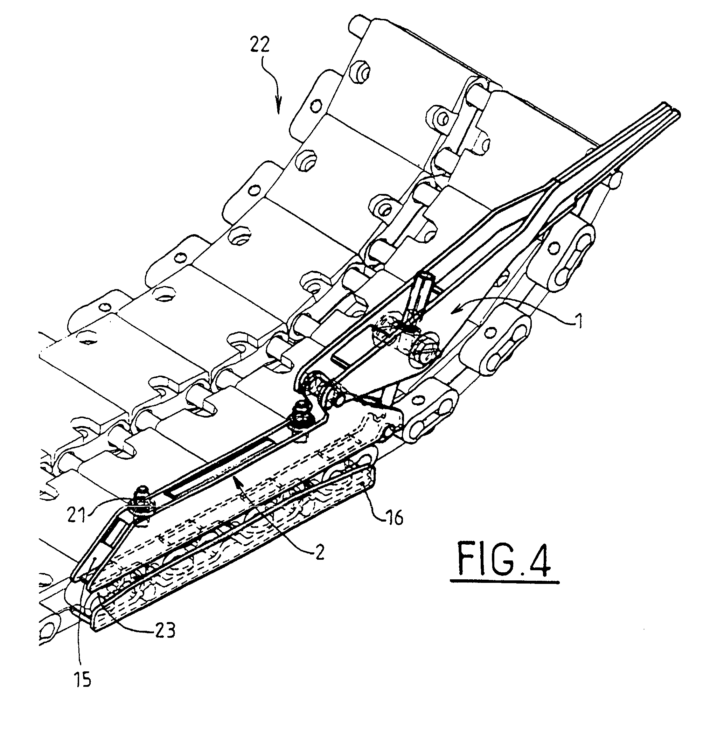

On a représenté sur la figure 4 la phase de blocage des deux brides 15 et 16. En effet, après serrage des boulons 21, ces deux brides viennent prendre en sandwich la chenille 22 par encastrement des connecteurs préangulés 23 dans les logements 20. Le second élément 2 et la chenille 22 sont alors complètements solidaires.

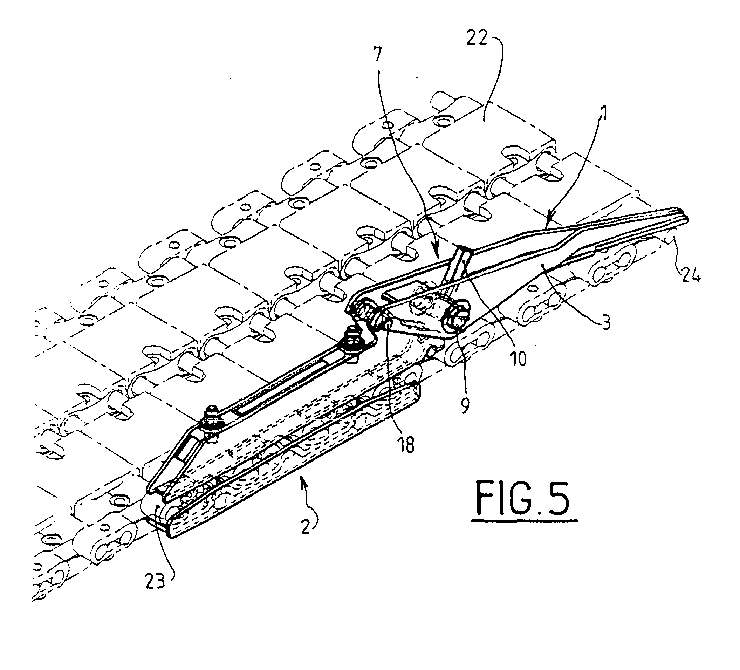

La figure 5 illustre la dernière phase de fonctionnement du dispositif. Comme décrit précédemment, le second élément est bridé sur les connecteurs préangulés 23 de la chenille 22, le moyen 7 pour rabattre la chenille peut alors être actionné. Pour ce faire, on rapproche la noix pivotante 9 des ergots cylindriques 11 de la vis 8 en serrant l'écrou 10. La noix pivotante 9 étant reliée au levier 3, elle provoque son pivotement autour de l'axe 18. On remarque que l'extrémité 24 de la chenille est toujours en appui sur le plat 6 du levier quelle que soit la phase de fonctionnement du dispositif. Après serrage complet du moyen 7 pour rabattre la chenille, l'extrémité 24 de cette dernière est suffisamment rabattue. L'objectif est donc atteint et le véhicule peut s'engager sur la chenille. Bien entendu, le moyen 7 pour rabattre la chenille décrit précédemment est mécanique mais il peut être assisté de manière hydraulique ou pneumatique à l'aide d'un vérin et de son système de commande par remplacement de la vis 8 et de l'écrou 10 (non représenté). Le dispositif d'aide au chenillage est bien évidemment dimensionné pour lutter contre les efforts exercés par la chenille qui pourraient nuire à l'affaissement de l'extrémité 24 de la chenille. En effet, le couple exercé par le dispositif et la chenille est supérieur au couple du dernier connecteur préangulé 23 immobilisé entre les deux brides 15 et 16 du second élément 2.

A titre illustratif, le dispositif d'aide au chenillage est réalisé sur un principe mécano soudé pesant environ 30 kilogrammes démontable instantanément en deux éléments, l'un d'environ douze kilogrammes et l'autre d'environ dix-huit kilogrammes.

## Revendications

1. Dispositif d'aide au chenillage d'un véhicule pour appliquer sur le sol une extrémité relevée (24) d'une chenille ouverte (22), à connecteurs préangulés (23), **caractérisé en ce qu'**il comprend un premier élément (1) fixé à la partie de chenille plaquée au sol et un second élément (2) mobile et démontable par rapport audit premier élément (1) apte à rabattre vers le sol l'extrémité relevée (24) de la chenille (22) pour permettre l'engagement du véhicule.

2. Dispositif d'aide au chenillage selon la revendication 1, **caractérisé en ce que** le premier élément (1) comprend un levier (3) pivotant par rapport au second élément (2) et un moyen (7) pour rabattre la chenille (22).

3. Dispositif d'aide au chenillage selon la revendication 2, **caractérisé en ce que** le levier (3) est en appui sur l'extrémité (24) de la chenille (22) et sur un axe (18) solidaire du second élément (2).

4. Dispositif d'aide au chenillage selon la revendication 2, **caractérisé en ce que** le moyen (7) pour rabattre la chenille (22) est du type mécanique, hydraulique ou pneumatique reliant le levier (3) au second élément (2).

5. Dispositif d'aide au chenillage selon la revendication 4, **caractérisé en ce que** le moyen mécanique (7) pour rabattre la chenille (22) est constitué d'une vis (8), d'une noix pivotante (9) et d'un écrou de serrage (10) .

6. Dispositif d'aide au chenillage selon la revendication 1 à 5, **caractérisé en ce que** le second élément (2) comprend deux brides (15, 16), l'une supérieure, l'autre inférieure, reliées entre elles par deux boulons (21) pour réaliser le blocage du second élément (2) par rapport à la chenille (22).

7. Dispositif d'aide au chenillage selon la revendication 6, **caractérisé en ce que** la bride inférieure (16) comportent des logements (20) dans lesquels s'encastrent les connecteurs préangulés (23) de la chenille (22) pour immobiliser ces derniers par rapport aux brides (15, 16).

8. Dispositif d'aide au chenillage selon la revendication 6 ou 7, **caractérisé en ce que** la bride supérieure (15) est conformée pour recevoir d'une part l'axe (18) autour duquel pivote lé levier (3) et d'autre part le moyen (7) pour rabattre la chenille (22).

9. Ensemble formé par :
- la partie de chenille plaquée au sol,
- l'extrémité relevée (24) de la chenille,
et le dispositif d'aide au chenillage selon l'une des revendications précédentes,
**caractérisé en ce que** l'ensemble exerce un couple supérieur à celui du dernier connecteur préangulé (23) immobilisé par rapport aux brides (15, 16).

## Patentansprüche

1. Vorrichtung zur Unterstützung bei der Kettenmontage eines Fahrzeuges, um ein aufgerichtetes Ende (24) einer offenen Gleiskette (22) mit vorgewinkelten Verbindungsstücken (23) am Boden zu befestigen, **dadurch gekennzeichnet, dass** sie ein erstes Element (1), das an dem am Boden geglätteten Abschnitt der Gleiskette befestigt ist, und ein in Bezug auf das genannte erste Element (1) bewegliches und demontierbares, zweites Element (2) umfasst, das dafür geeignet ist, das aufgerichtete Ende (24) der Gleiskette (22) zum Boden hin umzubiegen, um das Einfahren des Fahrzeuges zu erlauben.

2. Vorrichtung zur Unterstützung bei der Kettenmontage nach Anspruch 1, **dadurch gekennzeichnet, dass** das erste Element (1) einen in Bezug auf das zweite Element (2) drehbaren Hebel (3) und ein Mittel (7) zum Umbiegen der Gleiskette (22) umfasst.

3. Vorrichtung zur Unterstützung bei der Kettenmontage nach Anspruch 2, **dadurch gekennzeichnet, dass** sich der Hebel (3) auf dem Ende (24) der Gleiskette (22) und auf einer fest mit dem zweiten Element (2) verbundenen Achse (18) abstützt.

4. Vorrichtung zur Unterstützung bei der Kettenmontage nach Anspruch 2, **dadurch gekennzeichnet, dass** das Mittel (7) zum Umbiegen der Gleiskette (22) entweder mechanisch, hydraulisch oder pneumatisch ist und den Hebel (3) mit dem zweiten Element (2) verbindet.

5. Vorrichtung zur Unterstützung bei der Kettenmontage nach Anspruch 4, **dadurch gekennzeichnet, dass** das mechanische Mittel (7) zum Umbiegen der Gleiskette (22) aus einer Schraube (8), einer drehbaren Muffe (9) und einer Stellmutter (10) gebildet wird.

6. Vorrichtung zur Unterstützung bei der Kettenmontage nach Anspruch 1 bis 5, **dadurch gekennzeichnet, dass** das zweite Element (2) zwei Flansche (15, 16) umfasst, der eine oben liegend, der andere unten liegend, die miteinander durch zwei Bolzen (21) verbunden sind, um die Arretierung des zweiten Elementes (2) in Bezug auf die Gleiskette (22) zu bewirken.

7. Vorrichtung zur Unterstützung bei der Kettenmontage nach Anspruch 6, **dadurch gekennzeichnet, dass** der untere Flansch (16) Aufnahmen (20) enthält, in welche sich die vorgewinkelten Verbindungsstücke (23) der Gleiskette (22) einfügen, um diese Letzteren in Bezug auf die Flansche (15, 16) festzusetzen.

8. Vorrichtung zur Unterstützung bei der Kettenmontage nach Anspruch 6 oder 7, **dadurch gekennzeichnet, dass** der obere Flansch (15) dafür angepasst ist, um einerseits die Achse (18), um welche der Hebel (3) schwenkt, und andererseits das Mittel (7) zum Umbiegen der Gleiskette (22) aufzunehmen.

9. Baugruppe, die nach einem der vorgenannten Ansprüche aus:
- dem an den Boden geglätteten Abschnitt der Kette,
- dem aufgerichteten Ende (24) der Gleiskette und
- der Vorrichtung zur Unterstützung bei der Kettenmontage besteht,
**dadurch gekennzeichnet, dass** die Baugruppe ein Moment ausübt, das größer als das des letzten, in Bezug auf die Flansche (15, 16), festgesetzten, vorgewinkelten Verbindungsstückes (23) ist.

## Claims

1. A track-laying assistance device to hold at ground-level a raised end of an opened track having pre-angled connectors, wherein it comprises a first element fastened to the part of the track held to the ground and a second mobile element able to be dismounted with respect to said first element and able to push back to ground-level a raised end of the track to allow the vehicle to engage in it.

2. A track-laying assistance device according to Claim 1, wherein first element comprises a lever pivoting with respect to the second element and means to push down the track.

3. A track-laying assistance device according to Claim 2, wherein the lever presses on the end of the track and on a shaft integral with the second element.

4. A track-laying assistance device according to Claim 2, wherein the means to push down the track are of the mechanical, hydraulic or pneumatic type connecting the lever to the second element.

5. A track-laying assistance device according to Claim 4, wherein the mechanical means to push down the track are constituted by a screw, a pivoting nut and a tightening nut.

6. A track-laying assistance device according to Claims 1 to 5, wherein the second element comprises two flanges, one upper and one lower, connected together by two bolts to block the second element with respect to the track.

7. A track-laying assistance device according to Claim 6, wherein the lower flange incorporates housings in which the pre-angled connectors of the track are fitted in order to immobilize them with respect to the flanges.

8. A track-laying assistance device according to Claim 6 or 7, wherein the upper flange is formed so as to accommodate firstly the shaft around which the lever pivots and secondly the means to push down the track.

9. A track-laying assistance device according to any one of the previous Claims, wherein an assembly formed by:
- the part of the track held at ground-level,
- the raised end of the track, and
- the track-laying assistance device,
exerts a greater torque than that of the last pre-angled connector immobilized with respect to the flanges.
